# EUROPEAN PATENT APPLICATION

(11) **EP 3 693 442 A1**
(43) Date of publication of application: **12.08.2020**
(21) Application number: 19156214.9
(22) Date of filing: 08.02.2019
(51) Int. Cl.: C10G 1/06, C10G 3/00, D21C 11/00

(54) **PROCESS FOR THE PRODUCTION OF A BIO-OIL USING A ROSIN-CONTAINING OIL**

(71) Applicant: Sca Forest Products AB, 851 88 Sundsvall (SE)
(72) Inventor: KUGGE, Christian, 862 32 Kvissleby (SE); KUMAR, Shushil, 907 32 Umeå (SE)
(74) Representative: Weickmann & Weickmann PartmbB

(57) **Abstract**

The present invention relates to a process for producing bio-oil comprising depolymerized lignin using a rosin-containing oil.

## Description

The present invention relates to a process for producing bio-oil comprising depolymerized lignin using a rosin-containing oil.

Lignin is one of the two major components of lignocellulose in plants. Structurally it is a class of complex cross-linked phenolic polymers. From an energy point of view lignin has a high C/O ratio and accounts for a substantial proportion of carbon-based energy in lignocellulose. In the past however, lignin has only been considered as by-product of the pulp and paper industry. Only a minor amount of lignin produced by the pulp and paper industry was utilized commercially and the remainder was used as a low-value fuel. Recently, efforts have been made to recover lignin and convert it to bio-oil.

WO 2017/048163 and WO 2017/048164 describe processes for producing a bio-oil from lignin wherein a composition comprising kraft black liquor and an acidifying agent is treated in a reactor, optionally in the presence of H₂ and/or CO and optionally in the presence of a catalyst, thereby causing depolymerization of lignin in the black liquor composition and recovering a bio-oil comprising said depolymerized lignin.

There is, however, still a need to provide economically feasible methods for the production of a bio-oil comprising depolymerized lignin.

### Summary of the invention

The present invention provides novel processes for producing bio-oil from a lignin-containing starting material having improved efficacy and/or economic feasibility compared to known processes.

Further, the present invention provides a unit for producing bio-oil adapted for carrying out these novel processes.

The present inventors have found that when adding a rosin-containing oil in at least one step of the processes the yield of bio-oil is increased without a decrease in quality. The addition of a rosin-containing oil was also found to reduce the viscosity and to provide a lubricant effect whereby the process operation is facilitated. Further, the inventors have found that when simultaneously adding an acidifying agent and a rosin-containing oil to a composition comprising depolymerized lignin an excess foaming may be avoided.

A first aspect of the present invention relates to a process for producing bio-oil comprising the steps of:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) optionally adding at least one acidifying agent for pH adjustment,
(e) optionally filtering the oil phase,
(f) obtaining an oil phase from the bio-oil composition by phase-separation, wherein the oil phase comprises depolymerized lignin,
(g) optionally desalting the oil phase,
(h) optionally adding a an organic diluent to the oil phase, and
(i) obtaining bio-oil,
characterized in that
a rosin-containing oil is added in at least one of the steps (a)-(i), preferably at least in one of the steps (a), (d) or (h), and in step (i) a bio-oil is obtained comprising depolymerized lignin and rosin constituents.

A second aspect of the invention relates to a unit for producing bio-oil comprising:
(a) a container for providing a lignin-containing composition having an alkaline pH, and optionally including means for adding further components to the composition,
(b) a reactor adapted for operation under conditions of elevated temperature and elevated pressure and for producing a bio-oil composition comprising depolymerized lignin,
(c) optionally a condenser adapted for cooling the bio-oil composition from the reactor (b) and for removing gaseous components therefrom,
(d) optionally a mixing device adapted for adding at least one acidifying agent for pH adjustment and/or for adding at least one organic extracting agent to the composition from the reactor (b) or the condenser (c), if present,
(e) optionally a filtration device adapted for filtering the oil phase,
(f) a separator adapted for obtaining an oil phase from the bio-oil composition by phase separation, wherein the oil phase comprises depolymerized lignin oil and optionally an organic extracting agent,
(g) optionally a desalting device adapted for desalting the oil phase,
(h) optionally a mixing device adapted for adding a an organic diluent to the composition, and
(i) optionally a container for collecting bio-oil comprising depolymerized lignin,
wherein at least one of the container (a), the mixing device (d) and the mixing device (h) is adapted for adding a rosin-containing oil to the composition.

A third aspect of the invention relates to the use of a rosin-containing oil as a lubricant for a bio-oil composition.

A fourth aspect of the invention relates to the use of a rosin-containing oil as a defoaming agent for a bio-oil composition.

A fifth aspect of the invention relates to the use of a rosin-containing oil as a viscosity reducing agent for a bio-oil composition.

### Detailed description

The present invention relates to the production of a bio-oil comprising depolymerized lignin from a lignin-containing composition.

According to the invention, a rosin-containing oil, particularly tall oil including crude tall oil such as crude tall oil from a kraft process and/or fractions of tall oil such as tall oil pitch, tall oil rosin tall oil fatty acids, crude sulphate turpentine and/or any combination thereof, is added in at least one step during the production of bio-oil.

A *"rosin-containing oil"* may be derived from a natural source such as plants. A rosin-containing oil may be obtained from wood, e.g. from wood of coniferous trees such as pine or cedar. For example, a rosin-containing oil may be obtained from the wood of coniferous trees as by-product in the paper production.

A particular example of a rosin-containing oil is tall oil. Tall oil may be obtained by removal of tall soap from kraft black liquor and subsequent acidification.

The term *"tall oil"* as used herein includes tall oil and any product derived therefrom comprising rosin constituents such as crude tall oil, e.g. crude tall oil from a kraft process as well as fractions of crude tall oil such as tall oil pitch, tall oil rosin, tall oil fatty acids, crude sulphate turpentine and/or any combination thereof. Such fractions may differ in their rosin content.

The term *"rosin-containing oil"* further compasses any organic or mineral oil comprising rosin constituents, e.g. resin acids, e.g., abietic acid and/or pimaric acid. For example, a rosin-containing oil may comprise resin acids e.g., abietic acid and/or pimaric acid, in an amount of about 10 weight-% to about 80 weight-%, preferably about 10 weight-% to about 50 weight-%, more particularly about 20 weight-% to about 40 weight-% of the total weight of the oil.

According to the present invention, the rosin-containing oil is added to the composition at one or more process steps. In certain embodiments, a rosin-containing oil is added to the composition in one step, particularly in step (a), in step (d) or in step (h) of the process described herein, particularly in step (d).

In further embodiments, a rosin-containing oil is added to the composition in at least two steps, particularly in step (a) and in step (d), in step (d) and in step (h), in step (a) and in step (h), or in step (a), in step (d) and in step (h) of the process described herein.

According to step (a) of the process, a starting material is provided which is a lignin-containing composition having an alkaline pH, e.g. a pH of about 10 to about 14 or of about 12 to about 14. The lignin-containing composition may be any suitable lignin-containing composition, e.g. a lignin containing composition resulting from a pulp making process, particularly a black liquor composition, e.g. a kraft black liquor composition, i.e. a black liquor composition from a kraft pulping process, sulfite pulping process, soda pulping process, organosolv biorefinery process and/or ethanol biorefinery process. The lignin-containing composition may also be derived from dissolving a dry lignin in a suitable aqueous solvent, e.g. dry lignin obtained from the LignoBoost process, dry lignin from a lignin first biorefinery process and/or dry lignin from a sugar first biorefinery process.

According to the present invention, further components may be added to the lignin containing composition. In certain embodiments, lignin-derived components, e.g. solid lignin powder may be added to the liquid composition in order to increase the lignin content thereof. Different types of lignin powder are available, e.g. as described in WO 2017/48163. On the other hand, the lignin-containing composition may be diluted, e.g. by adding water in order to decrease the lignin content thereof. In a specific embodiment, the lignin-derived component may be selected from a partially depolymerized lignin oil or a depolymerized and partially hydrotreated, e.g. deoxygenated and desulfurized lignin oil. For example, lignin-derived components may be added in an amount of about to 100 weight-% based on the Klason lignin weight amount of the lignin-containing composition. Particularly, these compounds may be added in an amount of about 1 weight-% to about 100 weight-%, more particularly of about 5 weight-% to about 30 weight-%, most particularly in an amount of about 10 weight-% to about 20 weight-%, based on the Klason lignin weight amount of the lignin-containing composition.

For example the lignin-containing composition is a black liquor composition and lignin powder is added to the black liquor composition in an amount of about 40 weight-% to about 200 weight-%, more particularly in an amount of about 50 weight-% to about 100 weight-% based on the dry solid lignin weight amount originally present in the black liquor composition.

If desired, at least one further component, i.e. a non-lignin derived component may be added to the lignin-containing composition e.g. as described in WO 2017/48163. This further component may be selected from a carbonium and/or an ion scavenger, e.g. an arenium ion scavenger, a radical scavenger, a lubricant, an oxygen atom transfer agent or any combination thereof. The further component may be added in an amount of up to about 100 weight-%, particularly in an amount of about 1 weight-% to about 100 weight-%, more particularly in an amount of about 5 weight-% to about 30 weight-%, most particularly in an amount of about 10 weight-% to about 20 weight-%, based on the Klason lignin weight amount in the lignin-containing composition.

According to the invention, a rosin-containing oil may be added to the lignin-containing composition in step (a). The rosin-containing oil may be added in an amount of about 1% to about 100% by weight, particularly in an amount of about 10% to about 50% by weight, more particularly in an amount of 1% to about 45% by weight, most particularly in an amount of about 10% to about 35% by weight based on the Klason lignin amount in the lignin-containing composition of step (a). In a preferred embodiment the rosin-containing oil is added in an amount of about 20% to 30% by weight based on the Klason lignin amount in the lignin-containing composition of step (a).

In certain embodiments, the further component may be a carbonium and/or arenium ion scavenger or a radical scavenger, Examples of carbonium and/or arenium ion scavengers are aromatic hydrocarbons or alcohols such as phenol, 2-naphthol, catechol, methylcatechol, thymol, anisole, guaiacol, cresol, toluene, o-, m-, p-xylene, p-cymene or any combination thereof. Examples of radical scavengers are stilbenoids, such as piceatannol, methylpiceatannol or resveratrol, or any combination thereof. Examples of lubricants are toluene, o-, m-, p-xylene, p-cymene, gasoline, diesel or any combination thereof. Examples of oxygen atom transfer agents are anthraquinone, a tannine, menadione, quercetin or any combination thereof. With regard to these further components specific reference is made to WO 2017/048163.

In certain embodiments, the lignin-containing composition which is provided according to step (a) and passed to the depolymerization reactor according to step (b) may have a dry solid lignin weight amount in the range of about 5 weight-% to about 60 weight-%, particularly of about 5 weight-% to about 50 weight-% (e.g. about 40 weight-%), more particularly of about 5 weight-% to about 30 weight-%, most particularly of about 10 weight-% to about 20 weight-% based on the total weight of the lignin-containing composition.

Further, in certain embodiments, the lignin-containing composition which is provided according to step (a) and passed to the depolymerization reactor according to step (b) may have a Klason lignin content in the range of about 50 g/kg to about 300 g/kg, particularly of about 100 g/kg to about 200 g/kg based on the total volume of the lignin-containing composition. The Klason lignin content may be determined gravimetrically according to the SCAN-CM 71 method (Scandinavian Pulp, Paper and Board Testing Committee).

Step (b) of the process of the invention comprises passing the lignin-containing composition through a reactor under conditions of elevated temperature and elevated pressure, thereby causing depolymerization of the lignin, wherein a bio-oil composition comprising depolymerized lignin is obtained.

The reactor may be operated in an up-flow mode comprising introducing the composition into a lower portion of the reactor, passing the composition through the reactor in an upward direction and removing the composition from an upper portion of the reactor. In this context, the term "lower portion of the reactor" particularly refers to a position which is between the bottom of the reactor and a position which is about 30% upwards from the bottom of the reactor based on the total height of the reactor. The term "upper portion of the reactor" particularly refers to a position which is between the top of the reactor and a position which is about 30% downwards from the top of the reactor based on the total height of the reactor. In a particular embodiment, the composition may be introduced into the bottom of the reactor, passed through the reactor in an upward direction and removed from the top of the reactor.

When operating the lignin-depolymerization reactor in an up-flow mode as described above, the maximum running time of the reactor, e.g. the time until occurrence of a significant pressure drop within the reactor of about 10 bar or higher may be extended to several months even in case the reactor is fed with a composition having a dry solid content of 40 weight-% or more. This effect appears to be caused by a reduced deposition of solids within the reactor.

The depolymerization reaction in step (b) is carried out under conditions of elevated temperature and elevated pressure which are suitable for conducting the depolymerization reaction. The term "elevated temperature" relates to a temperature which is elevated compared to room temperature and the term "elevated pressure" relates to a pressure which is elevated compared to atmospheric pressure. For example, the reactor may be kept at a temperature between about 180°C and about 350°C, more particularly between about 200°C and about 280°C and at a pressure between about 40 bar and about 180 bar, more particularly between about 80 bar and about 120 bar, optionally in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, particularly in the presence of a reducing gas such as H₂ or H₂/CO, more particularly in the presence of H₂, and optionally in the presence of a catalyst. For the depolymerization of lignin a wide range of catalysts can be used such as a noble metal on a support such as a carbon-based support, e.g. activated carbon, charcoal, graphene, carbon nanotubes, or graphite, or a metal oxide-based support such as alumina, aluminum phosphate, zeolite, hydrotalcite, hydroxyapatite, magnesium oxide, zirconia, titanium dioxide, ceria, chromite or molybdite. Other possible catalysts are transition metals such as V, Cr, Fe, Co, Ni, Cu, Zn, Zr, Nb, Mo and W or transition metal oxides such as NiO on any of the previously mentioned supports, as well as unsupported metal, metal oxide, metal carbide or metal nitride particles wherein the metal is particularly a transition metal. Further unsupported catalysts that are suitable are Co-Mo-S, MoS₂, VS₂, Ni-Mo and Fe-Cu catalysts.

The reactor in step (b) may be operated with a vertical temperature gradient, particularly under conditions where a lower temperature is in the lower reactor portion and a higher temperature is in the upper reactor portion. The temperature difference between the lower reactor portion and the upper reactor portion may be between about 5°C and about 60°C, particularly between about 20°C and about 40°C. For example, the reactor may be operated at a temperature at about 220°C at the bottom and about 250°C at the top.

The efficacy of the process may be further increased when in step (b) the reactor is flushed with an aqueous liquid, particularly with water, in suitable intervals, e.g. after an operation period of about 2 days to about 7 days.

After the depolymerization reaction, the composition may be cooled in step (c) to a temperature below the boiling point of an organic extraction agent which is added in subsequent step (d). The cooling may be performed in a condenser in which gaseous components such as H₂ and other non-condensable gases are removed.

In step (d) optionally at least one acidifying agent for pH adjustment, e.g. for adjustment of the pH from about 3 to about 9, particularly from about 4 to about 7, is added to the composition. The acidifying agent may be selected from H₂SO₄, CO₂, SO₂ and acidic process water having a pH of about 1 to about 3 or any combination thereof.

Further, step (d) optionally comprises the addition of an organic extracting agent which is substantially non-miscible with water. In a particular embodiment, the organic extracting agent is a rosin-containing oil such as tall oil including crude tall oil, e.g. crude tall oil from a kraft process and/or a fraction of a tall oil, such as tall oil pitch tall oil resin or tall oil fatty acid. The rosin-containing oil may be added in an amount of about 1% to about 100% by weight, particularly in an amount of about 10% to about 50% by weight, in an amount of 1% to about 45% by weight or in an amount of about 10% to about 35% by weight based on the Klason lignin amount in the lignin-containing composition of step (a). More particularly, the rosin-containing oil is added in an amount of about 20% to 30% by weight based on the Klason lignin amount in the lignin-containing composition of step (a).

In certain embodiments, the extracting agent is a low-boiling polar and/or aromatic solvent which may have a boiling point of at least about 50°C or least about 70°C and up to about 90°C or up to about 120°C under atmospheric pressure. The low-boiling solvent may be selected from esters, ethers, ketones and alcohols, such as ethyl acetate, methyl tetrahydrofuran and isopropyl acetate or any combination thereof.

In particular embodiments, the organic extracting agent may be a lignin-derived oil, e.g. a bio-oil comprising depolymerized lignin which has been partially hydrotreated, e.g. partially deoxygenated and desulfurized. The invention also encompasses the addition of mixtures of a low-boiling solvent, a lignin-derived oil and/or a rosin-containing oil.

Usually, the organic extracting agent is added in excess to the mass of bio-oil composition, e.g. in an amount of about 50 weight-% or more, e.g. up to about 200 weight-% based on the total weight of the bio-oil composition.

According to an embodiment of the invention, the organic extracting agent, particularly the rosin-containing oil, is added before the acidifying agent to the composition. According to a further embodiment of the invention, the acidifying agent and the organic extracting agent, particularly the rosin-containing oil, are added substantially simultaneously to the composition thereby reducing and/or completely avoiding undesired foaming. The term "simultaneous addition" in this context is particularly to be understood, that both agents are at least partially added within a common time period.

The acidifying agent and/or extracting agent, e.g. the rosin-containing oil may be added at an elevated temperature, e.g. at a temperature of at least about 50°C to about 90°C, preferably about 75°C to about 85°C. The composition in step (d) may also be kept at an elevated temperature, e.g. at an temperature of about 35°C or more, particularly at a temperature of about 40°C to about 90°C, most particularly at about 40°C to about 60°C.

The presence of the rosin-containing oil in the composition of step (d) at elevated temperatures provides a beneficial effect, e.g. a lubricant effect and/or a viscosity reducing effect and increases the homogeneity of the composition. In certain embodiments, the composition has an absolute viscosity within the range of about 100-600 cP at 50°C measured according to ASTMD 4212-16 using Shell viscosity cups after addition of the rosin-containing oil.

After step (d) the composition is optionally subjected to a filtering step (e) which may be carried out by passing the composition through a filtration device, e.g. a filtration device having a mesh width of about 50 µm to about 200 µm such as about 70 µm.

Subsequently in step (f) a phase-separation is carried out. This phase-separation may comprise decanting the oil phase from a further phase, e.g. from an aqueous phase in a separator. The phase-separation may comprise separation the composition into an oil phase and at least one further phase, e.g. a phase comprising solids, particularly non-depolymerized lignin solids, and an aqueous phase comprising dissolved salts. These phases are withdrawn separately from the separator, thereby obtaining an oil phase comprising depolymerized lignin and organic extracting agent. In certain embodiments, the phase separation may be carried out as described in WO 2017/048163.

Subsequently, a desalting step (g) may be carried out. This step may comprise (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material. The aqueous washing liquid may contain a metal chelator such as EDTA and/or an organic acid such as formic acid, acetic acid, citric acid, oxalic acid and any mixture thereof to bind and remove metal ions such as Na⁺, K⁺ and Ca²⁺ ions present in the oil phase.

The desalting in step (g) may comprise (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material. This procedure results in an increased removal of undesired components such as salts from the oil phase and in an increased degree of purity of the bio-oil. The aqueous washing liquid may be at least partially recycled and reused several times. For example, a larger portion of the aqueous washing liquid may be recycled along with a smaller amount of fresh and salt-lean aqueous phase.

According to step (h) an organic diluent may be added to the oil phase. In certain embodiments, the organic diluent is added in an amount of about 20 to about 100 wt-% based on the weight of the oil phase. In certain embodiments, the organic diluent is a liquid having a lower volatility than a low-boiling organic extracting agent added in step (d). For example, the organic diluent may be selected from solvents, e.g. polar and/or aromatic solvents, having a boiling temperature of more than 100°C under atmospheric pressure such as benzyl alcohol, cresol and/or terpineol including isomers thereof. The organic diluent may also be a bio-oil derived component.

In a further particular embodiment, a compatibilizer such as partially deoxygenated bio-oil, is added in step (h) as an organic diluent, in particular in combination with a rosin-containing oil. The function of the compatibilizer includes an improvement of the compatibility between lignin-containing bio-oil and further components, e.g. the rosin-containing oil, e.g. by increasing the blendability and/or homogeneity.

A suitable partially deoxygenated bio-oil is obtainable by partial hydrotreatment of a lignin-containing bio-oil in a guard bed reactor under elevated temperature and pressure as described in co-owned EP application "A Process for the Production of a Hydrocarbon Product" filed on the same day as the present application.

The partially hydrotreated depolymerized lignin is characterized by a reduced oxygen and/or sulfur content compared to depolymerized and non-hydrotreated lignin oil. For example, the reduction in the oxygen weight content of the partially hydrotreated depolymerized lignin compared to non-hydrotreated depolymerized lignin may be from about 5% to about 50%, e.g. about 10% to about 30% based on the relative oxygen weight content of depolymerized and non-hydrotreated lignin as obtained in step (i) of the process according to the present invention. Further, the partially hydrotreated depolymerized lignin may be characterized by a reduced sulfur content compared to depolymerized and non-hydrotreated lignin oil. For example, the sulfur content in the partially hydrotreated depolymerized lignin is 0.2 wt% or less, or about 0.01 to about 0.1 wt% whereas depolymerized and non-hydrotreated lignin oil may have a sulfur content of about 1 wt%. Furthermore, the partially hydrotreated depolymerized lignin may be characterized by a reduced content of metal catalyst poisons such as sodium and/or potassium ions. For example, the content of sodium in the partially hydrotreated depolymerized lignin may be about 30 ppm or less, e.g. about 1 ppm to about 20 ppm or less and/or the content of potassium may be about 20 ppm or less, e.g. about 1 ppm to about 15 ppm.

In a particular embodiment of the invention, a rosin-containing oil is added in step (h) as an organic diluent. As indicated above, the rosin-containing oil may be tall oil including crude tall oil, e.g. crude tall oil from a kraft process and/or a fraction of a tall oil, such as tall oil pitch tall oil resin or tall oil fatty acid.

If in step (d) a low boiling organic extracting agent was added, the process may comprise an evaporation step after step (h) which comprises evaporating the low boiling organic extracting agent from step (d) comprised in the oil phase. A higher boiling diluent which has been added to the composition in step (h), and the rosin-containing oil will not be evaporated, but will remain with the oil phase. Any low-boiling extracting agent separated from the oil phase may be recycled to step (d). In case only a lignin-derived oil and/or rosin-containing oil has been added in step (d) as an organic extracting agent, the evaporation step may be omitted.

Step (i) comprises obtaining bio-oil comprising depolymerized lignin and rosin constituents from the rosin-containing oil added in at least one step (a)-(i), preferably in at least one of step (a), step (d) or step (h). Step (i) further comprises obtaining bio-oil comprising optionally non-evaporated organic extraction agent from step (d) and/or organic diluent from step (h). The depolymerized lignin obtained in step (i) has a weight average molecular weight which is substantially reduced compared to the weight average molecular weight of a depolymerized lignin added to the reactor in step (b). For example, the weight average molecular weight of the depolymerized lignin may be in the range of about 200 to about 2000 g/mol, e.g. about 250 to about 1000 g/mol, particularly of about 300 to about 800 g/mol.

The bio-oil obtained from the process comprises depolymerized lignin and rosin constituents. The amount of rosin constituents in the bio-oil may be in the range of at least 1 wt%, at least 5 wt%, of at least 20 wt% and up to about 99 wt% based on the total weight of the bio-oil.

The resulting bio-oil obtained in step (i) may be used for different applications such as a sizing agent for the production of hydrophobic paper, or for the manufacture of lignin nanoparticles or lignin softeners for e.g. plastics, or may be further processed to a hydrocarbon product, e.g. by hydrotreatment.

Hydrotreatment may, e.g. involve a treatment in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, e.g. in the presence of a reducing gas such as H₂ and/or CO and a hydrotreatment catalyst at an elevated temperature, e.g. at a temperature between about 250°C to about 400°C, particularly between about 270°C and about 350°C. The product resulting from the hydrotreatment is a hydrocarbon product containing only minor amounts of nitrogen, sulfur and/or oxygen, for example 0.1 weight-% or less nitrogen, 0.05 weight-% or less sulfur and 0.2 weight-% or less oxygen. A partially hydrotreated lignin oil may contain about, e.g. 0.5 wt% nitrogen, 0.5 wt% sulfur, 77 wt% carbon, 7 wt% hydrogen and 15 wt% oxygen.

The hydrocarbon product obtained from the hydrotreatment may be subjected to a phase separation wherein the product is separated into a gaseous phase comprising low boiling components, a liquid hydrocarbon product phase and an aqueous phase. The liquid hydrocarbon product may be subjected to a fractionation based on the boiling temperature. An exemplary hydrotreatment procedure is described in WO 2017/078582.

In a particular embodiment the process of the invention as described above is operated continuously.

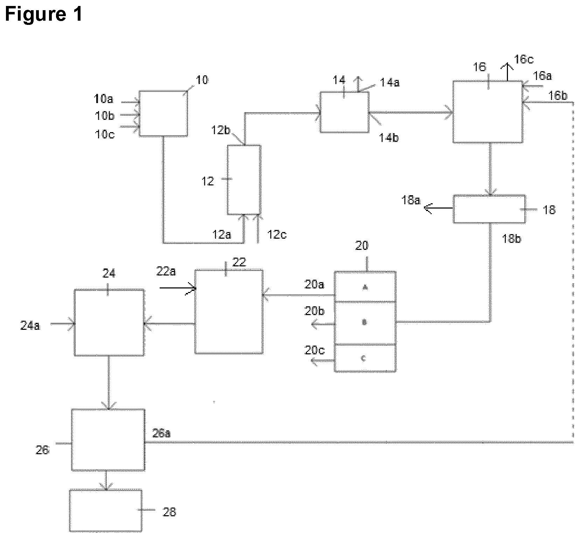

The process may be performed in a unit for producing bio-oil. A particular embodiment of such a unit is schematically depicted in Figure 1. The unit comprises a container (10) for providing a lignin-containing composition. The container (10) may be formed as a mixing tank having several inlets (10a, 10b, 10c) for introducing the lignin-containing composition, further components and optionally a rosin-containing oil. The lignin-containing composition is passed from container (10) to a lignin-depolymerization reactor (12) which is operated under conditions of elevated temperature and pressure. The reactor (12) comprises an inlet (12a) for introducing the lignin-containing composition into a lower reactor portion, particularly into the reactor bottom and an outlet (12b) for removing the composition from an upper reactor portion, particularly from the top of the reactor. Further, the reactor may comprise an inlet (12c) for introducing a reducing gas such as H₂ under pressure.

The composition is then transferred from the reactor (12) to a condenser (14) where the composition is cooled, e.g. below 100°C and H₂ and other non-condensable gases are withdrawn via an outlet (14a). Thereafter, the liquid portion of the composition is withdrawn through an outlet (14b) and passed to a mixing device (16) adapted for adding at least one acidifying agent, e.g. by means of inlet (16a) and, optionally the rosin-containing oil, and at least one organic extracting agent, e.g. by means of inlet (16b). Gases produced in the mixing device may be removed through an outlet (16c).

The acidified composition is then passed through an optional filtration device (18). The solids are removed through an outlet (18a) and the liquid stream (18b) is passed to a phase-separator (20). In the phase-separator (20) the composition separated into individual phases, particularly into an oil phase (A) and at least one further phase, e.g. a solid-containing phase (B) and a dissolved salt-containing aqueous phase (C). The oil phase (A) comprising the depolymerized lignin, rosin-containing oil and the organic extracting agent is withdrawn from the separator (20), e.g. by decanting via outlet (20a). The further phases (B,C) may be withdrawn via respective outlets (20b, 20c).

The oil phase is passed to an optional desalting device (22) for reducing the salt content thereof. Desalting may encompass the addition of an aqueous washing liquid which is added as stream (22a) followed by phase-separation and/or passing the oil phase over an adsorbent and/or an ion exchange material (not shown). The washing liquid may be recycled and reused several times.

The oil phase may be passed to an optional mixing device (24) adapted for adding a high boiling organic diluent and, optionally the rosin-containing oil, to the composition via inlet (24a). Thereafter, the oil phase comprising the depolymerized lignin, the rosin-containing oil, the further organic extracting agent and optionally the organic diluent is passed to an evaporator (26) for evaporating at least a part of low-boiling organic extracting agent, if present, comprised in the oil phase. The evaporated organic extraction agent may be withdrawn via outlet (26a) and recycled to the mixing device (16) via inlet (16b). From the evaporator (26), the oil phase may be passed to a container (28) for collecting the product which is a bio-oil comprising depolymerized lignin and rosin constituents.

Further, the unit may comprise a hydrotreatment reactor, optionally a phase separator and optionally a fractionation device (not shown) for producing a hydrocarbon product from the bio-oil.

The invention relates to the use of a rosin-containing oil as a lubricant in a bio-oil composition such as a bio-oil composition in a process of producing bio-oil.

The invention relates to the use of a rosin-containing oil as a lubricant in a bio-oil, particularly in a bio-oil obtainable by a process as described herein. The invention also relates to the use of a rosin-containing oil as a defoaming agent in a bio-oil composition.

The invention further relates to a bio-oil comprising depolymerized lignin and rosin constituents.

The invention further relates to a bio-oil obtainable by a process as described herein.

The present invention is further defined by the following embodiments which are part of the specification
1. A process for producing bio-oil comprising the steps of:
   (a) providing a lignin-containing composition having an alkaline pH,
   (b) passing the lignin-containing composition through a reactor under conditions of elevated temperature and elevated pressure, thereby causing depolymerization of the lignin, wherein a bio-oil composition comprising depolymerized lignin is obtained,
   (c) optionally cooling the bio-oil composition and removing gaseous components therefrom,
   (d) optionally adding at least one acidifying agent for pH adjustment,
   (e) optionally filtering the oil phase,
   (f) obtaining an oil phase from the bio-oil composition by phase-separation, wherein the oil phase comprises depolymerized lignin,
   (g) optionally desalting the oil phase,
   (h) optionally adding a an organic diluent to the oil phase, and
   (i) obtaining bio-oil,
   characterized in that
   a rosin-containing oil is added in at least one of the steps (a)-(i), preferably at least in one of the steps (a), (d) or (h), and in step (i) a bio-oil is obtained comprising depolymerized lignin and rosin constituents.
2. The process of item 1 wherein the lignin-containing composition of step (a) is a black liquor composition.
3. The process of item 2 wherein lignin powder is added to the black liquor composition in step (a), particularly in an amount of about 20 weight-% to about 200 weight-%, more particularly in an amount of about 40 weight-% to about 150 weight-%, even more particularly in an amount of about 50 weight-% to about 100 weight-% based on the dry solid lignin weight amount originally present in the black liquor composition.
4. The process of any one of the preceding items wherein an ion scavenger, a lubricant, an oxygen atom transfer agent, a lignin-derived component or any combination thereof is added to the lignin-containing composition in step (a), particularly in an amount of about 1 weight-% to about 100 weight-%, more particularly in an amount of about 5 weight-% to about 30 weight-%, based on the Klason lignin weight amount in the lignin-containing composition.
5. The process of any one of the preceding items wherein the lignin-containing composition of step (a) comprises a dry solid lignin weight amount of about 5 weight-% to about 30 weight-%, particularly of about 10 weight-% to about 20 weight-% based on the total weight of the lignin-containing composition.
6. The process of any one of the preceding items wherein in step (b) the reactor is operated in an up-flow mode, comprising introducing the composition into a lower portion of the reactor, passing the composition through the reactor in an upward direction and removing the composition from an upper portion of the reactor.
7. The process of any one of the preceding items wherein in step (b) the reactor is kept at a temperature between about 180°C and about 350°C and a pressure between about 40 bar and about 180 bar optionally in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, e.g. in the presence of a reducing gas such as H₂ or H₂/CO and optionally in the presence of a catalyst.
8. The process of any one of the preceding items wherein in step (b) the reactor is operated with a vertical temperature gradient, particularly under conditions where a lower temperature is in the lower reactor portion and a higher temperature is in the upper reactor portion.
9. The process of item 8 wherein the temperature difference between the lower reactor portion and the upper reactor portion is between about 5°C and about 60°C, particularly between about 20°C and about 40°C.
10. The process of any one of the preceding items wherein in step (b) the reactor is flushed with an aqueous liquid, e.g. after an operation period of about 2 to about 7 days.
11.The process of any one of the preceding items wherein in step (d) the bio-oil composition is kept at an elevated temperature, e.g. at a temperature of about 35°C or more, particularly at a temperature of about 40°C to about 90°C.
12. The process of any one of the preceding claims wherein the acidifying agent added in step (d) is selected from H₂SO₄, CO₂, SO₂ and acidic process water having a pH of 1-3 or any combination thereof.
13. The process of any one of the preceding items wherein the acidifying agent in step (d) is added in an amount to adjust a pH from about 3 to about 9, particularly from about 4 to about 7.
14. The process of any one of the preceding items wherein in step (d) the acidifying agent is kept at an elevated temperature, e.g. at a temperature of about 50°C to about 90°C, when added to the bio-oil composition.
15. The process of any one of the preceding items wherein the rosin-containing oil is tall oil including crude tall oil, such as crude tall oil from a kraft process and/or a fraction of tall oil, such as tall oil pitch, tall oil rosin and/or tall oil fatty acids, crude sulphate turpentine, and/or any combination thereof.
16. The process of any one of the preceding items wherein the rosin-containing oil is used as a lubricant and/or defoaming agent and/or viscosity reducing agent.
17. The process of any one of the preceding items wherein the rosin-containing oil is added in step (d).
18. The process of item 17 wherein in step (d) the rosin-containing oil is kept at an elevated temperature, e.g. at a temperature of about 50°C to about 90°C, when added to the bio-oil composition.
19. The process of items 17 or 18 wherein in step (d) the acidifying agent and the rosin-containing oil are added substantially simultaneously to the composition.
20. The process of any one of the preceding items wherein the rosin-containing oil is added in step (d) in an amount of at least about 1% by weight, in an amount of about 1% to about 100% by weight, or particularly in an amount of about 10% to about 50% by weight based on the Klason lignin amount in the lignin-containing composition of step (a).
21.The process of any one of the preceding items wherein the rosin-containing oil is added in step (d) in an amount of about 1% to about 45% by weight, particularly in an amount of about 10% to about 35% by weight based on the Klason lignin amount in the lignin-containing composition of step (a).
22. The process of any one of the preceding items wherein the rosin-containing oil is added in step (d) in an amount of about 20% to about 100% by weight based on the Klason lignin amount in the lignin-containing composition of step (a).
23. The process of any one of the preceding items wherein the phase-separation in step (e) comprises decanting the oil phase from an aqueous phase.
24. The process of any one of the preceding items wherein the phase-separation in step (e) comprises separating the bio-oil composition into an oil phase, and at least one aqueous phase, e.g. a first aqueous phase comprising solids, particularly non-depolymerized lignin solids, and a second aqueous phase comprising dissolved salts.
25. The process of any one of the preceding items wherein desalting in step (g) comprises (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material, wherein the aqueous washing liquid may comprise a metal chelator and/or an organic acid.
26. The process of item 25 wherein desalting in step (g) comprises (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material, wherein the aqueous washing liquid may comprise a metal chelator and/or an organic acid.
27. The process of item 25 or 26 wherein the aqueous washing liquid is recycled and reused several times.
28. The process of any one of the preceding items wherein the organic diluent added in step (h) is selected from benzyl alcohol, cresol, terpineol including isomers thereof, bio-oil derived components and combinations thereof.
29. The process of any one of the preceding items wherein the depolymerized lignin obtained in step (i) has a weight average molecular weight of about 200 to about 2000 g/mol.
30. The process of any one of the preceding items wherein the bio-oil obtained in step (i) is further processed to a hydrocarbon product.
31. The process of item 30 wherein the bio-oil is subjected to hydrotreatment.
32. The process of item 31 wherein the hydrotreatment comprises a treatment in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, e.g. in the presence of a reducing gas such as H₂ and/or CO and a hydrotreatment catalyst at a temperature between about 250°C to about 400°C, particularly between about 270°C and about 350°C.
33. The process of item 31 or 32 wherein the hydrocarbon product obtained from the hydrotreatment is subjected to a phase-separation wherein the product is separated into a gaseous phase, a liquid hydrocarbon product phase and an aqueous phase.
34.The process of item 33 wherein the liquid hydrocarbon product is subjected to a fractionation.
35. The process of any one of the preceding items which is operated continuously.
36.A unit for producing bio-oil comprising:
   (a) a container for providing a lignin-containing composition having an alkaline pH, and optionally including means for adding further components to the composition,
   (b) a reactor adapted for operation under conditions of elevated temperature and elevated pressure and for producing a bio-oil composition comprising depolymerized lignin,
   (c) optionally a condenser adapted for cooling the bio-oil composition from the reactor (b) and for removing gaseous components therefrom,
   (d) optionally a mixing device adapted for adding at least one acidifying agent for pH adjustment and/or for adding at least one organic extracting agent to the composition from the reactor (b) or the condenser (c), if present,
   (e) optionally a filtration device adapted for filtering the oil phase,
   (f) a separator adapted for obtaining an oil phase from the bio-oil composition by phase separation, wherein the oil phase comprises depolymerized lignin oil and optionally an organic extracting agent,
   (g) optionally a desalting device adapted for desalting the oil phase,
   (h) optionally a mixing device adapted for adding a an organic diluent to the composition, and
   (i) optionally a container for collecting bio-oil comprising depolymerized lignin,
   wherein at least one of the container (a), the mixing device (d) and the mixing device (h) is adapted for adding a rosin-containing oil to the composition.
37. The unit of item 36, wherein the reactor (b) is adapted for operation in an up-flow mode, and comprises an inlet for introducing the lignin-containing composition from the container (a) into a lower reactor portion, means for passing the composition through the reactor in an upward direction and an outlet for removing the composition from an upper reactor portion.
38.A unit for producing a hydrocarbon product comprising the unit of item 36 or 37 and further comprising:
   (a) a hydrotreatment reactor,
   (b) optionally a phase-separator, and
   (c) optionally a fractionation device.
39. Use of a rosin-containing oil as a defoaming agent for a bio-oil composition, particularly in a process of producing bio-oil, more particularly in a process of any one of items 1-35.
40. Use of a rosin-containing oil as a lubricant for a bio-oil composition, particularly in a process of producing bio-oil, more particularly in a process of any one of items 1-35.
41. Use of a rosin-containing oil as a viscosity reducing agent for a bio-oil composition, particularly in a process of producing bio-oil, more particularly in a process of any one of items 1-35
42. The use of any one of items 39 to 41 wherein the rosin-containing oil is tall oil including crude tall oil, such as crude tall oil from a kraft process and/or a fraction of tall oil, such as tall oil pitch.
43.A bio-oil comprising depolymerized lignin and rosin constituents.
44.A bio-oil obtainable by a process of any one of items 1-35.

### Examples

### Example 1

297 g treated black liquor from a depolymerization reactor were heated to 80 °C. 11 g crude tall oil were heated to 80 °C and added to the black liquor to allow mixing for 10 minutes at 80 °C. Thereafter, the mixture was pumped to a beaker simultaneously with sulfuric acid in an amount to adjust a target pH of 4.5. The acidification process was performed for 20 minutes with almost no foaming followed by another 20 minutes mixing time.

The viscosity of the resulting bio-oil blend was significantly lower compared with bio-oil containing no tall oil. The bio-oil appearance and flow behavior in glassware indicated a beneficial lubricant effect providing improved processability.

### Example 2

298 g treated black liquor from a depolymerization reactor and 11 g crude tall oil were separately heated to 80 °C. Both liquids and sulfuric acid were all pumped separately but simultaneously to a beaker to adjust a target pH of 4.5. The acidification process was performed for 20 minutes with almost no foaming (even less foaming than Example 1) followed by another 20 minutes mixing time.

The viscosity of final bio-oil blend was significantly lower compared with bio-oil containing no tall oil. The bio-oil appearance and flow behavior in glassware indicated a beneficial lubricant effect providing improved processability.

### Example 3 (Comparative)

The acidification of treated black liquor from a depolymerization reactor was shown to create a large amount of foam without addition of tall oil as a defoaming agent. Although the amount of foam was not quantified, it was a considered as significant processability problem in the production of depolymerized lignin.

## Claims

1. A process for producing bio-oil comprising the steps of:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) optionally adding at least one acidifying agent for pH adjustment,
(e) optionally filtering the oil phase,
(f) obtaining an oil phase from the bio-oil composition by phase-separation, wherein the oil phase comprises depolymerized lignin,
(g) optionally desalting the oil phase,
(h) optionally adding an organic diluent to the oil phase, and
(i) obtaining bio-oil,
**characterized in that**
a rosin-containing oil is added in at least one of the steps (a)-(i), preferably at least in one of the steps (a), (d) or (h), and in step (i) a bio-oil is obtained comprising depolymerized lignin and rosin constituents.

2. The process of claim 1 wherein the lignin-containing composition of step (a) is a black liquor composition.

3. The process of claim 2 wherein lignin powder is added to the black liquor composition in step (a), particularly in an amount of about 20 weight-% to about 200 weight-%, more particularly in an amount of about 40 weight-% to about 150 weight-%, even more particularly in an amount of about 50 weight-% to about 100 weight-% based on the dry solid lignin weight amount originally present in the black liquor composition.

4. The process of any one of the preceding claims wherein an ion scavenger, a lubricant, an oxygen atom transfer agent, a lignin-derived component or any combination thereof is added to the lignin-containing composition in step (a), particularly in an amount of about 1 weight-% to about 100 weight-%, more particularly in an amount of about 5 weight-% to about 30 weight-%, based on the Klason lignin weight amount in the lignin-containing composition.

5. The process of any one of the preceding claims wherein the lignin-containing composition of step (a) comprises a dry solid lignin weight amount of about 5 weight-% to about 30 weight-%, particularly of about 10 weight-% to about 20 weight-% based on the total weight of the lignin-containing composition.

6. The process of any one of the preceding claims wherein the rosin-containing oil is added in an amount of at least about 1% by weight, or of about 1% to about 100% by weight, and particularly in an amount of about 10% to about 50% by weight based on the Klason lignin amount in the lignin-containing composition of step (a).

7. The process of any one of the preceding claims wherein the rosin-containing oil is tall oil including crude tall oil, such as crude tall oil from a kraft process, and/or a fraction of crude tall oil, such as tall oil pitch, tall oil rosins, tall oil fatty acids, crude sulphate turpentine and/or any combination thereof.

8. The process of any one of the preceding claims wherein in step (d) the bio-oil composition is kept at an elevated temperature, e.g. at a temperature of about 35°C or more, particularly at a temperature of about 40°C to about 90°C.

9. The process of any one of the preceding claims wherein the acidifying agent in step (d) is added in an amount to adjust a pH from about 3 to about 9, particularly from about 4 to about 7.

10. The process of any one of the preceding claims wherein the rosin-containing oil is added in step (d).

11. The process of claim 10 wherein in step (d) the rosin-containing oil is added before the acidifying agent to the composition or wherein the acidifying agent and the rosin-containing oil are added substantially simultaneously to the composition.

12. The process of any one of the preceding claims wherein in step (d) the acidifying agent and/or the rosin-containing oil is/are kept at an elevated temperature, e.g. at a temperature of about 50°C to about 90°C, when added to the bio-oil composition.

13. The process of any one of the preceding claims wherein the bio-oil obtained in step (i) is further processed to a hydrocarbon product.

14. Use of a rosin-containing oil as a lubricant and/or defoaming agent and/or viscosity reducing agent in a bio-oil composition.

15. A unit for producing bio-oil comprising:
(a) a container for providing a lignin-containing composition having an alkaline pH, and optionally including means for adding further components to the composition,
(b) a reactor adapted for operation under conditions of elevated temperature and elevated pressure and for producing a bio-oil composition comprising depolymerized lignin,
(c) optionally a condenser adapted for cooling the bio-oil composition from the reactor (b) and for removing gaseous components therefrom,
(d) optionally a mixing device adapted for adding at least one acidifying agent for pH adjustment and/or for adding at least one organic extracting agent to the composition from the reactor (b) or the condenser (c), if present,
(e) optionally a filtration device adapted for filtering the oil phase,
(f) a separator adapted for obtaining an oil phase from the bio-oil composition by phase separation, wherein the oil phase comprises depolymerized lignin and optionally an organic extracting agent,
(g) optionally a desalting device adapted for desalting the oil phase,
(h) optionally a mixing device adapted for adding a an organic diluent to the composition, and
(i) optionally a container for collecting bio-oil comprising depolymerized lignin,
wherein at least one of the container (a), the mixing device (d) and the mixing device (h) is adapted for adding a rosin-containing oil to the composition.
